# FASCICULE DE BREVET EUROPEEN

(11) **EP 1 226 989 B1**
(45) Date de publication et mention de la délivrance du brevet: **31.08.2005**
(21) Numéro de dépôt: 02001315.7
(22) Date de dépôt: 18.01.2002
(51) Int. Cl.: B60H 1/00

(54) **Procédé d'identification d'actionneurs dans une installation de climatisation de véhicule automobile**
Verfahren zum Identifizieren von Aktuatoren in Fahrzeugklimaanlagen
Actuator identification process in a vehicle air conditioning unit

(30) Priorité: 24.01.2001 FR 0100915
(43) Date de publication de la demande: 31.07.2002
(73) Titulaire: VALEO SYSTEMES THERMIQUES, 78320 Le Mesnil Saint-Denis (FR)
(72) Inventeur: Bruzy, Christophe, 78650 Beynes (FR); Richardot, Philippe, 7000 Vesoul (FR)
(74) Mandataire: Gérard, Michel

(56) Documents cités:
- EP-A- 0 838 357
- EP-A- 1 155 885
- DE-A- 19 828 259
- US-A- 5 791 981

## Description

### Arrière-plan de l'invention

L'invention concerne les installations de climatisation de véhicules automobiles et plus particulièrement un procédé d'identification d'actionneurs faisant partie de ces installations.

Les installations de climatisation de véhicules automobiles comprennent une pluralité de volets de mixage ou répartition d'air qui sont déplacés au moyen d'actionneurs utilisant typiquement des moteurs pas à pas.

Une unité centrale de contrôle adresse des commandes aux différents actionneurs afin d'amener les volets dans des positions correspondant à des ordres reçus : ventilation, régulation de la température dans l'habitacle ou différentes zones de l'habitacle à une valeur désirée, désembuage, dégivrage,... L'unité de contrôle reçoit aussi des informations transmises par les actionneurs, notamment des informations relatives aux positions des volets, en particulier la venue en fin de course d'ouverture ou de fermeture.

La sophistication croissante des installations de climatisation se traduit par un nombre accru de volets et donc d'actionneurs. Afin d'éviter l'utilisation de faisceaux de fils encombrants, coûteux et délicats à installer, il est connu de connecter les actionneurs et autres périphériques de l'installation de climatisation, tels que panneau de contrôle et sondes de température, à un bus d'informations relié à l'unité de contrôle et sur lequel transitent des informations de commande destinées aux périphériques et des informations d'état transmises par ceux-ci à l'unité de contrôle.

Il est alors nécessaire d'affecter une adresse particulière à chaque périphérique, notamment à chaque actionneur.

Par souci de standardisation, en vue de réduire les coûts, on utilise des actionneurs de même type pour les différents volets. Ils se présentent donc sous forme de boîtiers semblables.

Lorsque les adresses des actionneurs sont enregistrées dans ceux-ci avant leur montage, des risques d'erreurs de montage peuvent se produire en raison de ressemblances entre les boîtiers. Il est alors souhaitable de disposer d'un moyen aisé et rapide de vérification du montage correct, donc d'identification des actionneurs montés.

L'affectation des adresses pourrait en variante être réalisée après montage des boîtiers offrant l'avantage d'une standardisation de ceux-ci. Là encore, cela nécessite un moyen d'identification des actionneurs, moyen d'identification qui doit de préférence être rapide et automatique.

Le même souci de vérification de montage ou d'affectation d'adresses se présente en cas de réparation, lorsqu'un ou plusieurs actionneurs doivent être remplacés.

### But et résumé de l'invention

L'invention a pour but d'offrir un procédé d'identification d'actionneur utilisant un moteur pas à pas qui permette d'effectuer aisément, rapidement, et automatiquement des opérations de vérification ou d'affectation d'adresses lors du montage ou de la réparation d'une installation de climatisation.

Ce but est atteint grâce à un procédé comprenant les étapes qui consistent à :
- commander le déplacement du volet sur la totalité de son débattement angulaire,
- compter le nombre de pas moteur pendant ce déplacement, et
- comparer le nombre de pas comptés à au moins une information préenregistrée correspondant à un volet ou type de volet particulier.

Ainsi, le procédé selon l'invention est basé sur une différenciation entre actionneurs en fonction des débattements angulaires des volets qu'ils commandent. En effet, dans une installation de climatisation, selon la fonction qu'ils réalisent, les volets de mixage ou de distribution d'air ont généralement des débattements angulaires différents définis par des butées de fin de course.

L'on pourra commander plusieurs fois le déplacement du volet sur la totalité de son débattement angulaire et effectuer alors une moyenne entre les nombres de pas comptés lors des différents déplacements.

Le procédé selon l'invention pourra être utilisé pour le contrôle du montage d'un actionneur, lors de la fabrication ou de la réparation de l'installation de climatisation. Dans un tel cas, l'on commande le déplacement du volet associé à cet actionneur et l'on vérifie la conformité entre le nombre de pas comptés et l'information préenregistrée correspondant à ce volet.

Un tel contrôle conserve son utilité même dans le cas où deux volets différents ont un même débattement angulaire. Cela peut se produire par exemple pour deux volets ayant des fonctions identiques et situés du côté droit et du côté gauche du véhicule. Le risque d'erreur non détectée au montage est en effet limité seulement à une possible inversion entre les actionneurs des deux volets, ce risque étant même inexistant si, au cours d'une réparation, un seul actionneur de ces deux volets doit être remplacé.

Le procédé selon l'invention pourra aussi être utilisé pour l'affectation d'une adresse à un actionneur, lors de la fabrication ou de la réparation de l'installation de climatisation. Dans un tel cas, l'on commande le déplacement du volet associé à cet actionneur, on identifie ce volet par comparaison entre le nombre de pas comptés et plusieurs informations préenregistrées correspondant à différents volets, et on mémorise dans une mémoire d'un circuit associé à l'actionneur une adresse correspondant au volet identifié.

Lors du montage initial des actionneurs dans l'installation de climatisation, ce procédé d'affectation d'adresses est de préférence utilisé dans le cas où les débattements angulaires des volets peuvent être suffisamment différenciés.

Même dans le cas où deux volets ont un même débattement angulaire, le procédé d'affectation d'adresses reste toutefois utilisable en cas de réparation, dans la mesure où deux actionneurs de volets ayant même débattement ne doivent pas être simultanément remplacés.

### Brève description des dessins

L'invention sera mieux comprise à la lecture de la description faite ci-après, à titre indicatif mais non limitatif, en référence aux dessins annexés sur lesquels :
- la figure 1 est une vue très schématique d'une installation de climatisation de véhicule automobile ;
- la figure 2 est un schéma général d'un actionneur de l'installation de la figure 1 ;
- la figure 3 est un ordinogramme montrant le déroulement d'un procédé d'identification conforme à l'invention appliqué au contrôle du montage d'un actionneur de volet;
- la figure 4 montre une variante de mise en oeuvre du procédé de la figure 3 ; et
- la figure 5 est un ordinogramme montrant le déroulement d'un procédé d'identification conforme à l'invention appliqué à l'affectation d'adresse à un actionneur de volet.

### Description détaillée de modes de réalisation

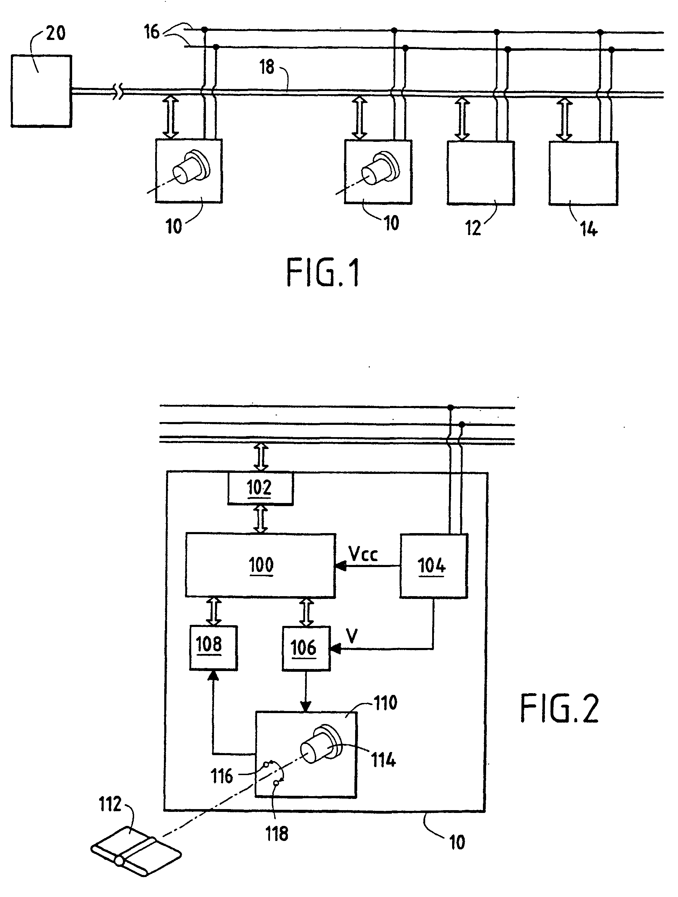

Comme le montre de façon très schématique la figure 1, une installation de climatisation de véhicule automobile comprend classiquement une pluralité d'actionneurs 10 (dont deux seulement sont montrés sur la figure) pour commander le déplacement de volets de distribution et de mixage d'air afin de réaliser des fonctions souhaitées de ventilation, réglage de température d'habitacle, désembuage, dégivrage,... commandées à partir d'un panneau de contrôle 12.

Les actionneurs 10 ainsi que le panneau de contrôle 12 et des sondes de température 14 sont reliés à un bus d'énergie 16 acheminant la tension de batterie du véhicule ou une tension dérivée de celle-ci, et à un bus d'informations 18. Le bus d'informations 18 est relié à une unité centrale de contrôle 20. Celle-ci reçoit des informations d'état provenant du panneau de contrôle 12, des sondes 14 et des actionneurs 10, telles que des informations de position des volets, et transmet des informations de commande, notamment des ordres d'actionnement des volets par adressage des actionneurs 10, ceux-ci ayant chacun une adresse spécifique.

Comme le montre plus en détail la figure 2, chaque actionneur 10 comprend un circuit de commande 100 à microprocesseur relié au bus d'informations 18 par une interface de bus 102. Un circuit d'alimentation électrique 104 relié au bus d'énergie 16 comprend des circuits de filtrage, protection et régulation de tension pour délivrer une tension logique d'alimentation v_{cc} au circuit de commande 100 et une tension d'alimentation moteur V à un circuit d'interface analogique 106.

Un motoréducteur 110 couplé à un volet 112 de répartition ou de mixage d'air comprend un moteur pas à pas 114 qui reçoit de l'interface 106 la tension V sous forme de trains d'impulsions appliquées aux phases du moteur 114 à une fréquence de pilotage donnée, sous la commande de l'unité 100 à laquelle l'interface 106 est reliée.

Une interface de données 108 est reliée au motoréducteur 110 et à l'unité de commande 100 pour transmettre à celle-ci des données d'état, notamment des données de position du volet. Le débattement angulaire du volet 112 est limité par des butées de fin de course 116, 118 qui définissent les positions angulaires extrêmes du volet, par exemple volet complètement ouvert ou volet complètement fermé. Les venues du volet en fin de course sont détectées par l'unité de commande 100 via l'interface 108. Les butées 116, 118 coopèrent avec l'axe du volet 112 ou du moteur 114 ou d'un organe rotatif couplé à ceux-ci.

Une installation de climatisation et un actionneur tels que brièvement décrits ci-avant sont connus de l'homme de l'art, de sorte qu'une description plus détaillée n'est pas nécessaire.

Conformément à l'invention, un actionneur est identifiable par la mesure du débattement angulaire du volet qui lui est associé, plus précisément par le décompte du nombre de pas moteur, c'est-à-dire de pas élémentaires du moteur pas à pas, accomplis lors du déplacement du volet sur la totalité de son débattement angulaire.

A cet effet, l'unité centrale de contrôle commande un actionneur à identifier pour provoquer le déplacement du volet associé sur tout son débattement angulaire possible, recueille une information de cet actionneur représentant le nombre de pas moteur comptés lors de ce déplacement, et compare cette information avec une ou plusieurs données préenregistrées qui correspondent chacune à un volet ou un type de volet particulier. Par volet ou type de volet particulier, on entend ici un volet ou un type de volet associé à une parmi plusieurs fonctions spécifiques de ventilation, ou à une fonction de mixage, ou à une fonction de désembuage, ou à une fonction de dégivrage,...

Deux applications particulières de ce procédé d'identification seront maintenant décrites.

Une première application concerne le contrôle du montage des actionneurs lors de l'assemblage ou de la réparation de l'installation de climatisation, chaque actionneur étant affecté d'une adresse spécifique connue de l'unité centrale de contrôle, soit préalablement à son montage, soit lors du montage.

L'adresse d'un actionneur est par exemple stockée dans une mémoire non volatile du circuit de commande 100.

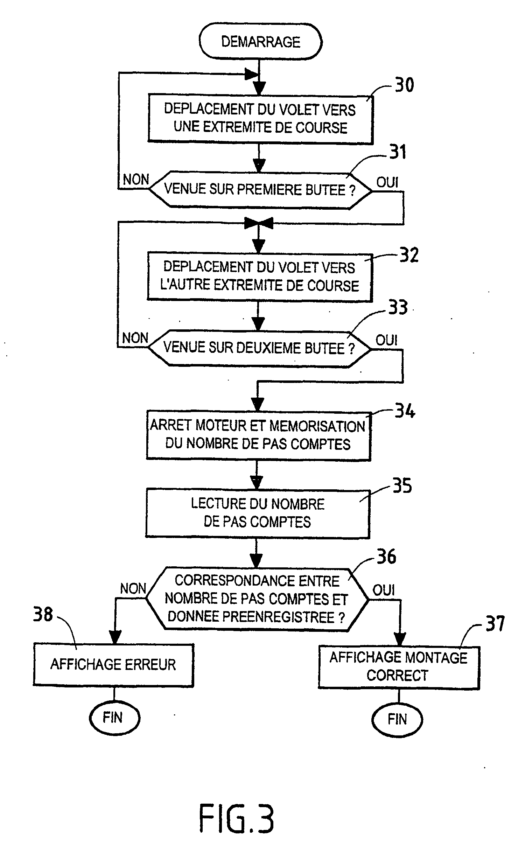

La figure 3 montre les opérations effectuées en vue de ce contrôle, par déroulement d'un programme de contrôle chargé dans l'unité centrale de contrôle 20 et de programmes chargés dans le circuit de commande 100.

Une première étape 30 au démarrage du programme de contrôle consiste à commander le déplacement du volet associé à l'actionneur à contrôler vers l'une des extrémités de sa course, ce qui est détecté (test 31) par la venue sur une des butées de fin de course.

La commande de l'actionneur est réalisée par adressage de celui-ci en utilisant l'adresse connue de l'unité centrale de commande 20 correspondant au volet particulier associé à l'actionneur.

Ensuite, le déplacement du volet est commandé (étape 32) ainsi que le démarrage du comptage des pas élémentaires du moteur pas à pas par le circuit de commande 100. Ce comptage est effectué par exemple à partir des impulsions délivrées par l'interface analogique 106 sous la commande du circuit 100.

En réponse à la détection de la venue sur l'autre butée de fin de course (test 33), le moteur est arrêté et le nombre de pas comptés est mémorisé par le circuit de commande 100 (étape 34).

Le nombre de pas comptés est lu par l'unité centrale de contrôle 20 via le bus d'informations 18, par adressage de l'actionneur (étape 35).

Le nombre lu est comparé (test 36) par l'unité centrale de commande avec une donnée préenregistrée qui correspond au débattement angulaire connu du volet ou du type de volet associé à l'actionneur considéré. La donnée préenregistrée peut être exprimée en nombre de pas moteur ou en valeur d'angle. Dans ce dernier cas, le nombre de pas comptés est converti en angle à partir de la valeur angulaire connue d'un pas élémentaire du moteur pas à pas, les actionneurs 10 utilisant des moteurs identiques.

Selon le résultat de la comparaison, un affichage de résultat de contrôle sous forme de "montage correct" (étape 37) ou "erreur" (étape 38) est commandé sur un dispositif d'affichage par exemple relié provisoirement à un port de sortie de l'unité centrale de contrôle 20. Le résultat sera considéré comme correct si le nombre de pas comptés correspond à la donnée préenregistrée avec une marge d'erreur prédéterminée, par exemple de 5 % ou de 10 % pour tenir compte d'inévitables imprécisions et variations dans le temps du nombre de pas élémentaires du moteur pas à pas pour une valeur d'angle donnée.

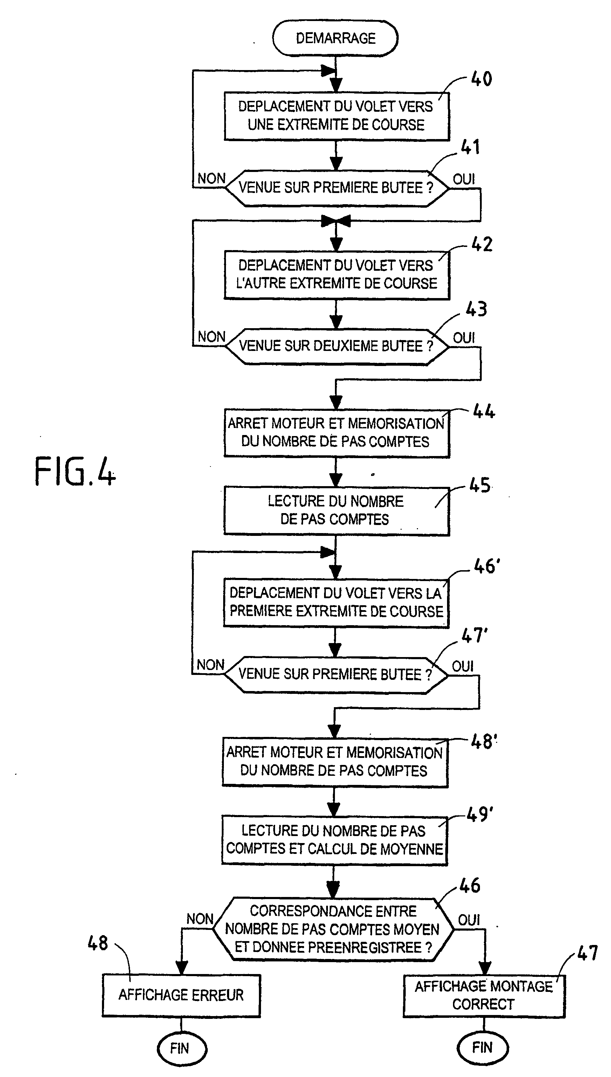

La figure 4 illustre une variante du procédé de contrôle selon laquelle plusieurs (en l'espèce deux) déplacements du volet dans tout son débattement angulaire sont commandés.

Les étapes 40 à 45 sont identiques aux étapes 30 à 35 du procédé de la figure 3, à savoir venue du volet en une première butée, commande du déplacement du volet et comptage des pas moteur, détection de la vue du volet sur la deuxième butée, mémorisation du nombre de pas comptés et lecture de ce nombre.

Ensuite, un nouveau déplacement du volet est commandé (étape 46') et les pas moteur sont comptés (après remise à zéro).

En réponse à la détection de la venue à nouveau sur la première butée de fin de course (étape 47'), le moteur est arrêté et le nombre de pas est mémorisé par le circuit de commande 100 (étape 48').

Le nombre de pas comptés est lu par l'unité centrale de contrôle et un nombre de pas moyen est évalué (étape 49') par moyenne arithmétique avec le nombre de pas comptés précédent.

Ensuite, le nombre moyen obtenu est comparé avec la donnée préenregistrée (test 46) correspondant au volet considéré, puis le résultat du contrôle est affiché (étapes 47, 48), de la même manière que dans les étapes 36, 37 et 38 du procédé de la figure 3.

On comprendra aisément que plus de deux débattements angulaires complets peuvent être commandés avant de calculer la valeur moyenne de pas moteur correspondant à un débattement angulaire du volet.

Une autre application du procédé d'identification d'actionneur selon l'invention concerne l'affectation d'adresses aux actionneurs lors de l'assemblage de l'installation de climatisation ou lors de sa réparation.

L'affectation d'adresse à un actionneur associé à un volet particulier consiste alors à enregistrer, dans une mémoire de préférence non volatile du circuit de commande 100, l'adresse connue par l'unité centrale de contrôle 20 pour cet actionneur.

Dans l'unité centrale de contrôle 20 sont contenues les adresses des différents actionneurs et des données représentant les débattements angulaires des volets associés aux actionneurs. A chaque adresse est associée une donnée de débattement angulaire.

Le processus d'affectation d'adresse est réalisé à chaque fois qu'un actionneur est monté.

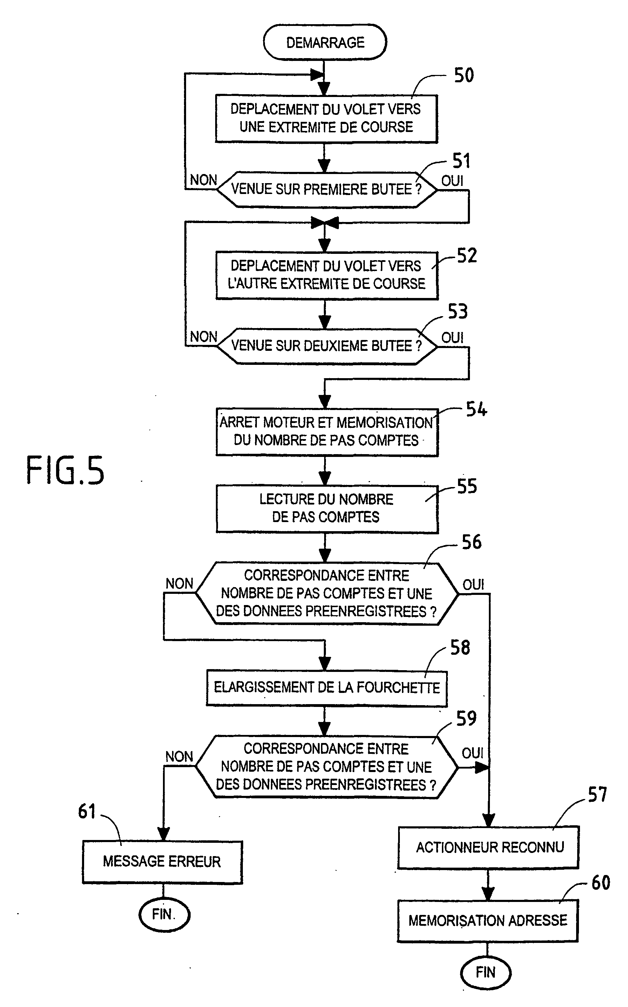

La figure 5 montre les opérations effectuées en vue de cette affectation d'adresse par déroulement d'un programme d'adressage chargé dans l'unité centrale de contrôle 20 et de programmes chargés dans le circuit de commande 100.

La première étape 50 après démarrage du programme d'adressage consiste à commander le déplacement du volet associé à l'actionneur considéré vers l'une des extrémités de sa course, ce qui est détecté (étape 51) par la venue sur l'une des butées de fin de course.

La commande de l'actionneur est réalisée par adressage de celui-ci en utilisant l'adresse provisoire (généralement formée de 0) qui lui est donnée à la fabrication.

Ensuite, le déplacement du volet est commandé (étape 52) ainsi que le démarrage du comptage des pas élémentaires du moteur pas à pas par le circuit de commande 100.

En réponse à la détection de la venue sur l'autre butée (test 53), le moteur est arrêté et le nombre de pas comptés est mémorisé par le circuit de commande (étape 54).

Le nombre de pas comptés est lu par l'unité centrale de contrôle 20 via le bus d'informations 18, par adressage de l'actionneur avec son adresse provisoire (étape 55).

Le nombre lu est comparé (test 56) par l'unité centrale avec les données préenregistrées qui correspondent aux débattements angulaires des différents volets de l'installation. Comme indiqué précédemment en référence à la figure 3, les données enregistrées peuvent être exprimées en nombres de pas moteur ou en valeurs d'angles.

Si une correspondance est établie avec une des données enregistrées (test 57), dans une fourchette de 5 % à 10 % par exemple centrée sur cette donnée, l'actionneur est réputé reconnu (étape 58). Sinon, la fourchette ci-dessus peut être élargie (étape 59). Si après cet élargissement, l'actionneur n'est toujours pas reconnu (test 60), un message d'erreur est émis (étape 61) et le processus doit être redémarré, éventuellement après avoir changé l'actionneur.

Lorsque l'actionneur est réputé reconnu, l'adresse associée connue de l'unité centrale de contrôle 20 est transmise à l'actionneur via le bus d'informations 18 pour être enregistrée dans une mémoire, de préférence non volatile, du circuit de commande 100 (étape 60).

Au fur et à mesure de l'installation et de l'affectation d'adresses aux actionneurs, la liste des données enregistrées comparées avec le nombre de pas moteur compté peut être progressivement réduite en retirant de cette liste les données correspondant aux actionneurs déjà identifiés.

En outre, comme dans le mode de réalisation de la figure 4, le nombre de pas comptés pourra être une valeur moyenne calculée sur plusieurs débattements angulaires complets des volets.

Le processus d'affectation d'adresses pourra être utilisé en cas de réparation d'une installation de climatisation, lorsqu'un nouvel actionneur ou plusieurs nouveaux actionneurs non pourvu(s) d'adresse définitive est ou sont installés(s). Dans ce cas, on pourra s'accommoder d'une situation dans laquelle des débattements angulaires semblables ou voisins sont associés à des adresses différentes, c'est-à-dire lorsque des volets ayant des débattements angulaires semblables ou voisins sont associés à des actionneurs différents, dans la mesure où les actionneurs à remplacer sont associés à des volets ayant des débattements angulaires différents. En effet, seules pourront être attribuées des adresses non déjà affectées à des actionneurs en place.

### Arrière-plan de l'invention

L'invention concerne les installations de climatisation de véhicules automobiles et plus particulièrement un procédé d'identification d'actionneurs faisant partie de ces installations.

Les installations de climatisation de véhicules automobiles comprennent une pluralité de volets de mixage ou répartition d'air qui sont déplacés au moyen d'actionneurs utilisant typiquement des moteurs pas à pas.

Une unité centrale de contrôle adresse des commandes aux différents actionneurs afin d'amener les volets dans des positions correspondant à des ordres reçus : ventilation, régulation de la température dans l'habitacle ou différentes zones de l'habitacle à une valeur désirée, désembuage, dégivrage,... L'unité de contrôle reçoit aussi des informations transmises par les actionneurs, notamment des informations relatives aux positions des volets, en particulier la venue en fin de course d'ouverture ou de fermeture.

La sophistication croissante des installations de climatisation se traduit par un nombre accru de volets et donc d'actionneurs. Afin d'éviter l'utilisation de faisceaux de fils encombrants, coûteux et délicats à installer, il est connu de connecter les actionneurs et autres périphériques de l'installation de climatisation, tels que panneau de contrôle et sondes de température, à un bus d'informations relié à l'unité de contrôle et sur lequel transitent des informations de commande destinées aux périphériques et des informations d'état transmises par ceux-ci à l'unité de contrôle.

Il est alors nécessaire d'affecter une adresse particulière à chaque périphérique, notamment à chaque actionneur.

Par souci de standardisation, en vue de réduire les coûts, on utilise des actionneurs de même type pour les différents volets. Ils se présentent donc sous forme de boîtiers semblables.

Lorsque les adresses des actionneurs sont enregistrées dans ceux-ci avant leur montage, des risques d'erreurs de montage peuvent produire en raison de ressemblances entre les boîtiers. Il est alors souhaitable de disposer d'un moyen aisé et rapide de vérification du montage correct, donc d'identification des actionneurs montés.

L'affectation des adresses pourrait en variante être réalisée après montage des boîtiers offrant l'avantage d'une standardisation de ceux-ci. Là encore, cela nécessite un moyen d'identification des actionneurs, moyen d'identification qui doit de préférence être rapide et automatique.

Le même souci de vérification de montage ou d'affectation d'adresses se présente en cas de réparation, lorsqu'un ou plusieurs actionneurs doivent être remplacés. Un tel dispositif est connu du document intercalaire A. 54(3) CBE référencé EP-A-1 155 885.

### But et résumé de l'invention

L'invention a pour but d'offrir un procédé d'identification d'actionneur utilisant un moteur pas à pas qui permette d'effectuer aisément, rapidement, et automatiquement des opérations de vérification ou d'affectation d'adresses lors du montage ou de la réparation d'une installation de climatisation.

Ce but est atteint grâce à un procédé comprenant les étapes qui consistent à :
- commander le déplacement du volet sur la totalité de son débattement angulaire,
- compter le nombre de pas moteur pendant ce déplacement, et
- comparer le nombre de pas comptés à au moins une information préenregistrée correspondant à un volet ou type de volet particulier.

Ainsi, le procédé selon l'invention est basé sur une différenciation entre actionneurs en fonction des débattements angulaires des volets qu'ils commandent. En effet, dans une installation de climatisation, selon la fonction qu'ils réalisent, les volets de mixage ou de distribution d'air ont généralement des débattements angulaires différents définis par des butées de fin de course.

L'on pourra commander plusieurs fois le déplacement du volet sur la totalité de son débattement angulaire et effectuer alors une moyenne entre les nombres de pas comptés lors des différents déplacements.

Le procédé selon l'invention pourra être utilisé pour le contrôle du montage d'un actionneur, lors de la fabrication ou de la réparation de l'installation de climatisation. Dans un tel cas, l'on commande le déplacement du volet associé à cet actionneur et l'on vérifie la conformité entre le nombre de pas comptés et l'information préenregistrée correspondant à ce volet

Un tel contrôle conserve son utilité même dans le cas où deux volets différents ont un même débattement angulaire. Cela peut se produire par exemple pour deux volets ayant des fonctions identiques et situés du côté droit et du côté gauche du véhicule. Le risque d'erreur non détectée au montage est en effet limité seulement à une possible inversion entre les actionneurs des deux volets, ce risque étant même inexistant si, au cours d'une réparation, un seul actionneur de ces deux volets doit être remplacé.

Le procédé selon l'invention pourra aussi être utilisé pour l'affectation d'une adresse à un actionneur, lors de la fabrication ou de la réparation de l'installation de climatisation. Dans un tel cas, l'on commande le déplacement du volet associé à cet actionneur, on identifie ce volet par comparaison entre le nombre de pas comptés et plusieurs informations préenregistrées correspondant à différents volets, et on mémorise dans une mémoire d'un circuit associé à l'actionneur une adresse correspondant au volet identifié.

Lors du montage initial des actionneurs dans l'installation de climatisation, ce procédé d'affectation d'adresses est de préférence utilisé dans le cas où les débattements angulaires des volets peuvent être suffisamment différenciés.

Même dans le cas où deux volets ont un même débattement angulaire, le procédé d'affectation d'adresses reste toutefois utilisable en cas de réparation, dans la mesure où deux actionneurs de volets ayant même débattement ne doivent pas être simultanément remplacés.

### Brève description des dessins

L'invention sera mieux comprise à la lecture de la description faite ci-après, à titre indicatif mais non limitatif, en référence aux dessins annexés sur lesquels :
- la figure 1 est une vue très schématique d'une installation de climatisation de véhicule automobile ;
- la figure 2 est un schéma général d'un actionneur de l'installation de la figure 1 ;
- la figure 3 est un ordinogramme montrant le déroulement d'un procédé d'identification conforme à l'invention appliqué au contrôle du montage d'un actionneur de volet ;
- la figure 4 montre une variante de mise en oeuvre du procédé de la figure 3 ; et
- la figure 5 est un ordinogramme montrant le déroulement d'un procédé d'identification conforme à l'invention appliqué à l'affectation d'adresse à un actionneur de volet.

### Description détaillée de modes de réalisation

Comme le montre de façon très schématique la figure 1, une installation de climatisation de véhicule automobile comprend classiquement une pluralité d'actionneurs 10 (dont deux seulement sont montrés sur la figure) pour commander le déplacement de volets de distribution et de mixage d'air afin de réaliser des fonctions souhaitées de ventilation, réglage de température d'habitacle, désembuage, dégivrage,... commandées à partir d'un panneau de contrôle 12.

Les actionneurs 10 ainsi que le panneau de contrôle 12 et des sondes de température 14 sont reliés à un bus d'énergie 16 acheminant la tension de batterie du véhicule ou une tension dérivée de celle-ci, et à un bus d'informations 18. Le bus d'informations 18 est relié à une unité centrale de contrôle 20. Celle-ci reçoit des informations d'état provenant du panneau de contrôle 12, des sondes 14 et des actionneurs 10, telles que des informations de position des volets, et transmet des informations de commande, notamment des ordres d'actionnement des volets par adressage des actionneurs 10, ceux-ci ayant chacun une adresse spécifique.

Comme le montre plus en détail la figure 2, chaque actionneur 10 comprend un circuit de commande 100 à microprocesseur relié au bus d'informations 18 par une interface de bus 102. Un circuit d'alimentation électrique 104 relié au bus d'énergie 16 comprend des circuits de filtrage, protection et régulation de tension pour délivrer une tension logique d'alimentation v_{cc} au circuit de commande 100 et une tension d'alimentation moteur V à un circuit d'interface analogique 106.

Un motoréducteur 110 couplé à un volet 112 de répartition ou de mixage d'air comprend un moteur pas à pas 114 qui reçoit de l'interface 106 la tension V sous forme de trains d'impulsions appliquées aux phases du moteur 114 à une fréquence de pilotage donnée, sous la commande de l'unité 100 à laquelle l'interface 106 est reliée.

Une interface de données 108 est reliée au motoréducteur 110 et à l'unité de commande 100 pour transmettre à celle-ci des données d'état, notamment des données de position du volet. Le débattement angulaire du volet 112 est limité par des butées de fin de course 116, 118 qui définissent les positions angulaires extrêmes du volet, par exemple volet complètement ouvert ou volet complètement fermé. Les venues du volet en fin de course sont détectées par l'unité de commande 100 via l'interface 108. Les butées 116, 118 coopèrent avec l'axe du volet 112 ou du moteur 114 ou d'un organe rotatif couplé à ceux-ci.

Une installation de climatisation et un actionneur tels que brièvement décrits ci-avant sont connus de l'homme de l'art, de sorte qu'une description plus détaillée n'est pas nécessaire.

Conformément à l'invention, un actionneur est identifiable par la mesure du débattement angulaire du volet qui lui est associé, plus précisément par le décompte du nombre de pas moteur, c'est-à-dire de pas élémentaires du moteur pas à pas, accomplis lors du déplacement du volet sur la totalité de son débattement angulaire.

A cet effet, l'unité centrale de contrôle commande un actionneur à identifier pour provoquer le déplacement du volet associé sur tout son débattement angulaire possible, recueille une information de cet actionneur représentant le nombre de pas moteur comptés lors de ce déplacement, et compare cette information avec une ou plusieurs données préenregistrées qui correspondent chacune à un volet ou un type de volet particulier. Par volet ou type de volet particulier, on entend ici un volet ou un type de volet associé à une parmi plusieurs fonctions spécifiques de ventilation, ou à une fonction de mixage, ou à une fonction de désembuage, ou à une fonction de dégivrage,...

Deux applications particulières de ce procédé d'identification seront maintenant décrites.

Une première application concerne le contrôle du montage des actionneurs lors de l'assemblage ou de la réparation de l'installation de climatisation, chaque actionneur étant affecté d'une adresse spécifique connue de l'unité centrale de contrôle, soit préalablement à son montage, soit lors du montage.

L'adresse d'un actionneur est par exemple stockée dans une mémoire non volatile du circuit de commande 100.

La figure 3 montre les opérations effectuées en vue de ce contrôle, par déroulement d'un programme de contrôle chargé dans l'unité centrale de contrôle 20 et de programmes chargés dans le circuit de commande 100.

Une première étape 30 au démarrage du programme de contrôle consiste à commander le déplacement du volet associé à l'actionneur à contrôler vers l'une des extrémités de sa course, ce qui est détecté (test 31) par la venue sur une des butées de fin de course.

La commande de l'actionneur est réalisée par adressage de celui-ci en utilisant l'adresse connue de l'unité centrale de commande 20 correspondant au volet particulier associé à l'actionneur.

Ensuite, le déplacement du volet est commandé (étape 32) ainsi que le démarrage du comptage des pas élémentaires du moteur pas à pas par le circuit de commande 100. Ce comptage est effectué par exemple à partir des impulsions délivrées par l'interface analogique 106 sous la commande du circuit 100.

En réponse à la détection de la venue sur l'autre butée de fin de course (test 33), le moteur est arrêté et le nombre de pas comptés est mémorisé par le circuit de commande 100 (étape 34).

Le nombre de pas comptés est lu par l'unité centrale de contrôle 20 via le bus d'informations 18, par adressage de l'actionneur (étape 35).

Le nombre lu est comparé (test 36) par l'unité centrale de commande avec une donnée préenregistrée qui correspond au débattement angulaire connu du volet ou du type de volet associé à l'actionneur considéré. La donnée préenregistrée peut être exprimée en nombre de pas moteur ou en valeur d'angle. Dans ce dernier cas, le nombre de pas comptés est converti en angle à partir de la valeur angulaire connue d'un pas élémentaire du moteur pas à pas, les actionneurs 10 utilisant des moteurs identiques.

Selon le résultat de la comparaison, un affichage de résultat de contrôle sous forme de "montage correct" (étape 37) ou "erreur" (étape 38) est commandé sur un dispositif d'affichage par exemple relié provisoirement à un port de sortie de l'unité centrale de contrôle 20. Le résultat sera considéré comme correct si le nombre de pas comptés correspond à la donnée préenregistrée avec une marge d'erreur prédéterminée, par exemple de 5 % ou de 10 % pour tenir compte d'inévitables imprécisions et variations dans le temps du nombre de pas élémentaires du moteur pas à pas pour une valeur d'angle donnée.

La figure 4 illustre une variante du procédé de contrôle selon laquelle plusieurs (en l'espèce deux) déplacements du volet dans tout son débattement angulaire sont commandés.

Les étapes 40 à 45 sont identiques aux étapes 30 à 35 du procédé de la figure 3, à savoir venue du volet en une première butée, commande du déplacement du volet et comptage des pas moteur, détection de la vue du volet sur la deuxième butée, mémorisation du nombre de pas comptés et lecture de ce nombre.

Ensuite, un nouveau déplacement du volet est commandé (étape 46') et les pas moteur sont comptés (après remise à zéro).

En réponse à la détection de la venue à nouveau sur la première butée de fin de course (étape 47'), le moteur est arrêté et le nombre de pas est mémorisé par le circuit de commande 100 (étape 48').

Le nombre de pas comptés est lu par l'unité centrale de contrôle et un nombre de pas moyen est évalué (étape 49') par moyenne arithmétique avec le nombre de pas comptés précédent.

Ensuite, le nombre moyen obtenu est comparé avec la donnée préenregistrée (test 46) correspondant au volet considéré, puis le résultat du contrôle est affiché (étapes 47, 48), de la même manière que dans les étapes 36, 37 et 38 du procédé de la figure 3.

On comprendra aisément que plus de deux débattements angulaires complets peuvent être commandés avant de calculer la valeur moyenne de pas moteur correspondant à un débattement angulaire du volet.

Une autre application du procédé d'identification d'actionneur selon l'invention concerne l'affectation d'adresses aux actionneurs lors de l'assemblage de l'installation de climatisation ou lors de sa réparation.

L'affectation d'adresse à un actionneur associé à un volet particulier consiste alors à enregistrer, dans une mémoire de préférence non volatile du circuit de commande 100, l'adresse connue par l'unité centrale de contrôle 20 pour cet actionneur.

Dans l'unité centrale de contrôle 20 sont contenues les adresses des différents actionneurs et des données représentant les débattements angulaires des volets associés aux actionneurs. A chaque adresse est associée une donnée de débattement angulaire.

Le processus d'affectation d'adresse est réalisé à chaque fois qu'un actionneur est monté.

La figure 5 montre les opérations effectuées en vue de cette affectation d'adresse par déroulement d'un programme d'adressage chargé dans l'unité centrale de contrôle 20 et de programmes chargés dans le circuit de commande 100.

La première étape 50 après démarrage du programme d'adressage consiste à commander le déplacement du volet associé à l'actionneur considéré vers l'une des extrémités de sa course, ce qui est détecté (étape 51) par la venue sur l'une des butées de fin de course.

La commande de l'actionneur est réalisée par adressage de celui-ci en utilisant l'adresse provisoire (généralement formée de 0) qui lui est donnée à la fabrication.

Ensuite, le déplacement du volet est commandé (étape 52) ainsi que le démarrage du comptage des pas élémentaires du moteur pas à pas par le circuit de commande 100.

En réponse à la détection de la venue sur l'autre butée (test 53), le moteur est arrêté et le nombre de pas comptés est mémorisé par le circuit de commande (étape 54).

Le nombre de pas comptés est lu par l'unité centrale de contrôle 20 via le bus d'informations 18, par adressage de l'actionneur avec son adresse provisoire (étape 55).

Le nombre lu est comparé (test 56) par l'unité centrale avec les données préenregistrées qui correspondent aux débattements angulaires des différents volets de l'installation. Comme indiqué précédemment en référence à la figure 3, les données enregistrées peuvent être exprimées en nombres de pas moteur ou en valeurs d'angles.

Si une correspondance est établie avec une des données enregistrées (test 57), dans une fourchette de 5 % à 10 % par exemple centrée sur cette donnée, l'actionneur est réputé reconnu (étape 58). Sinon, la fourchette ci-dessus peut être élargie (étape 59). Si après cet élargissement, l'actionneur n'est toujours pas reconnu (test 60), un message d'erreur est émis (étape 61) et le processus doit être redémarré, éventuellement après avoir changé l'actionneur.

Lorsque l'actionneur est réputé reconnu, l'adresse associée connue de l'unité centrale de contrôle 20 est transmise à l'actionneur via le bus d'informations 18 pour être enregistrée dans une mémoire, de préférence non volatile, du circuit de commande 100 (étape 60).

Au fur et à mesure de l'installation et de l'affectation d'adresses aux actionneurs, la liste des données enregistrées comparées avec le nombre de pas moteur compté peut être progressivement réduite en retirant de cette liste les données correspondant aux actionneurs déjà identifiés.

En outre, comme dans le mode de réalisation de la figure 4, le nombre de pas comptés pourra être une valeur moyenne calculée sur plusieurs débattements angulaires complets des volets.

Le processus d'affectation d'adresses pourra être utilisé en cas de réparation d'une installation de climatisation, lorsqu'un nouvel actionneur ou plusieurs nouveaux actionneurs non pourvu(s) d'adresse définitive est ou sont installés(s). Dans ce cas, on pourra s'accommoder d'une situation dans laquelle des débattements angulaires semblables ou voisins sont associés à des adresses différentes, c'est-à-dire lorsque des volets ayant des débattements angulaires semblables ou voisins sont associés à des actionneurs différents, dans la mesure où les actionneurs à remplacer sont associés à des volets ayant des débattements angulaires différents. En effet, seules pourront être attribuées des adresses non déjà affectées à des actionneurs en place.

## Revendications (Revendications pour l'(les) Etat(s) contractant(s) suivant(s): CH/LI)

1. Procédé d'identification d'un actionneur de volet à moteur pas à pas dans une installation de climatisation de véhicule automobile, **caractérisé en ce qu'**il comprend les étapes qui consistent à :
- commander le déplacement du volet sur la totalité de son débattement angulaire,
- compter le nombre de pas moteur pendant ce déplacement, et
- comparer le nombre de pas comptés à au moins une information préenregistrée correspondant à un volet ou type de volet particulier.

2. Procédé selon la revendication 1, **caractérisé en ce que** l'on commande le déplacement du volet entre deux butées de fin de course.

3. Procédé selon l'une quelconque des revendications 1 et 2, **caractérisé en ce que** l'on commande plusieurs fois le déplacement du volet sur la totalité de son débattement angulaire et l'on effectue une moyenne entre les nombres de pas comptés lors des différents déplacements.

4. Procédé selon l'une quelconque des revendications 1 à 3, pour le contrôle de montage d'un actionneur, **caractérisé en ce que** l'on commande le déplacement du volet associé à cet actionneur et l'on vérifie la conformité entre le nombre de pas comptés et l'information préenregistrée correspondant à ce volet.

5. Procédé selon l'une quelconque des revendications 1 à 3, pour l'affectation d'une adresse à un actionneur connecté via un bus d'informations à une unité centrale de contrôle, **caractérisé en ce que** l'on commande le déplacement du volet associé à cet actionneur, on identifie ce volet par comparaison entre le nombre de pas comptés et plusieurs informations préenregistrées correspondant à différents volets, et on mémorise dans une mémoire d'un circuit associé à l'actionneur une adresse correspondant au volet identifié.

## Revendications (Revendications pour l'(les) Etat(s) contractant(s) suivant(s): ALLEMAGNE, ITALIE et ESPAGNE)

1. Procédé d'identification d'un actionneur de volet à moteur pas à pas dans une installation de climatisation de véhicule automobile, comprenant les étapes qui consistent à :
- commander le déplacement du volet sur la totalité de son débattement angulaire,
- compter le nombre de pas moteur pendant ce déplacement, et
- comparer le nombre de pas comptés à au moins une information préenregistrée correspondant à un volet ou type de volet particulier,
**caractérisé en ce que** l'on commande plusieurs fois le déplacement du volet sur la totalité de son débattement angulaire et l'on effectue une moyenne entre les nombres de pas comptés lors des différents déplacements.

2. Procédé selon la revendication 1, **caractérisé en ce que** l'on commande le déplacement du volet entre deux butées de fin de course.

3. Procédé selon l'une quelconque des revendications 1 et 2, pour le contrôle de montage d'un actionneur, **caractérisé en ce que** l'on commande le déplacement du volet associé à cet actionneur et l'on vérifie la conformité entre le nombre de pas comptés et l'information préenregistrée correspondant à ce volet.

4. Procédé selon l'une quelconque des revendications 1 à 3, pour l'affectation d'une adresse à un actionneur connecté via un bus d'informations à une unité centrale de contrôle, **caractérisé en ce que** l'on commande le déplacement du volet associé à cet actionneur, on identifie ce volet par comparaison entre le nombre de pas comptés et plusieurs informations préenregistrées correspondant à différents volets, et on mémorise dans une mémoire d'un circuit associé à l'actionneur une adresse correspondant au volet identifié.

## Patentansprüche (Patentansprüche für folgende(n) Vertragsstaat(en): Schwelz, Liechtenstein)

1. Verfahren zur Identifikation eines Klappenstellglieds mit Schrittmotor in einer Kraftfahrzeugklimaanlage, **dadurch gekennzeichnet, dass** es die Schritte umfasst:
- die Versetzung der Klappe über der Gesamtheit ihres Winkelausschlags anzuweisen,
- die Anzahl der Motorschritte während dieser Versetzung zu zählen, und die Anzahl der gezählten Schritte mit zumindest einer vorab aufgenommenen, einer bestimmten Klappe oder einem bestimmten Klappentyp entsprechenden Information zu vergleichen.

2. Verfahren nach Anspruch 1, **dadurch gekennzeichnet, dass** die Versetzung der Klappe zwischen zwei Endanschlägen angewiesen wird.

3. Verfahren nach einem der Ansprüche 1 und 2, **dadurch gekennzeichnet, dass** die Versetzung der Klappe über die Gesamtheit ihres Winkelausschlags mehrere Male angewiesen wird und ein Mittelwert aus den Anzahlen der gezählten Schritte während der unterschiedlichen Versetzungen gebildet wird.

4. Verfahren nach einem der Ansprüche 1 bis 3 für die Kontrolle der Montage eines Stellglieds, **dadurch gekennzeichnet, dass** die Versetzung der diesem Stellglied zugeordneten Klappe angewiesen wird und die Übereinstimmung zwischen der Anzahl der gezählten Schritte und der vorab aufgenommenen, dieser Klappe entsprechenden Information überprüft wird.

5. Verfahren nach einem der Ansprüche 1 bis 3, für die Zuteilung einer Adresse an ein Stellglied, das mittels eines Informationsbusses mit einer zentralen Steuereinheit verbunden ist, **dadurch gekennzeichnet, dass** die Versetzung der diesem Stellglied zugeordneten Klappe angewiesen wird, die Klappe identifiziert wird durch Vergleich der Anzahl der gezählten Schritte und mehrerer vorab aufgenommener Informationen, die unterschiedlichen Klappen entsprechen, und eine der identifizierten Klappe entsprechende Adresse in einem Speicher eines dem Stellglied zugeordneten Schaltkreises gespeichert wird.

## Patentansprüche (Patentansprüche für folgende(n) Vertragsstaat(en): DE/IT/ES)

1. Verfahren zur Identifikation eines Klappenstellglieds mit Schrittmotor in einer Kraftfahrzeugklimaanlage, umfassend die Schritte, die darin bestehen:
- die Versetzung der Klappe über der Gesamtheit ihres Winkelausschlags anzuweisen,
- die Anzahl der Motorschritte während dieser Versetzung zu zählen, und
- die Anzahl der gezählten Schritte mit zumindest einer vorab aufgenommenen, einer bestimmten Klappe oder einem bestimmten Klappentyp entsprechenden Information zu vergleichen,
**dadurch gekennzeichnet, dass** die Versetzung der Klappe über die Gesamtheit ihres Winkelausschlags mehrere Male angewiesen wird und ein Mittelwert aus den Anzahlen der gezählten Schritte während der unterschiedlichen Versetzungen gebildet wird.

2. Verfahren nach Anspruch 1, **dadurch gekennzeichnet, dass** die Versetzung der Klappe zwischen zwei Endanschlägen angewiesen wird.

3. Verfahren nach einem der Ansprüche 1 und 2 für die Kontrolle der Montage eines Stellglieds, **dadurch gekennzeichnet, dass** die Versetzung der diesem Stellglied zugeordneten Klappe angewiesen wird und die Übereinstimmung zwischen der Anzahl der gezählten Schritte und der vorab aufgenommenen, dieser Klappe entsprechenden Information überprüft wird.

4. Verfahren nach einem der Ansprüche 1 bis 3, für die Zuteilung einer Adresse an ein Stellglied, das mittels eines Informationsbusses mit einer zentralen Steuereinheit verbunden ist, **dadurch gekennzeichnet, dass** die Versetzung der diesem Stellglied zugeordneten Klappe angewiesen wird, die Klappe identifiziert wird durch Vergleich der Anzahl der gezählten Schritte und mehrerer vorab aufgenommener Informationen, die unterschiedlichen Klappen entsprechen, und eine der identifizierten Klappe entsprechende Adresse in einem Speicher eines dem Stellglied zugeordneten Schaltkreises gespeichert wird.

## Claims (Claims for the following Contracting State(s): CH/LI)

1. Identification process for a stepping motor flap actuator in an automobile vehicle air conditioning installation, comprising the steps consisting of:
- commanding the movement of the flap throughout its entire angular motion,
- counting the number of motor steps during this movement and,
- comparing the number of steps counted to at least one pre-recorded piece of information corresponding to a flap or a specific type of flap.

2. Process of claim 1, **characterised in that** the movement of the flap is commanded between two travel limit switches.

3. Process of any of claims 1 or 2, **characterised in that** the movement of the flap is commanded several times throughout its entire angular motion and a mean is made of the number of steps counted during the various movements.

4. Process of any of claims 1 to 3, for controlling the assembly of an actuator, **characterised in that** the movement of the flap associated to this actuator is controlled and **in that** the conformity between the number of steps counted and the pre-recorded information corresponding to this flap.

5. Process of any of claims 1 to 3, for the attribution of an address to an actuator connected via an information bus to a central command unit, **characterised in that** the movement of the flap associated to this actuator is controlled, this flap is identified by comparison of the number of steps counted and several pre-recorded pieces of information corresponding to different flaps, and in a memory of a circuit associated to the actuator an address is saved which corresponds to the flap identified.

## Claims (Claims for the following Contracting State(s): GERMANY, ITALY AND SPAIN)

1. Identification process for a stepping motor flap actuator in an automobile vehicle air conditioning installation, comprising the steps consisting of:
- commanding the movement of the flap throughout its entire angular motion,
- counting the number of motor steps during this movement and,
- comparing the number of steps counted to at least one pre-recorded piece of information corresponding to a flap or a specific type of flap,
**characterised in that** the movement of the flap is commanded several times throughout its angular entire motion and a mean is made of the number of steps counted during the various movements.

2. Process of claim 1, **characterised in that** the movement of the flap is commanded between two travel limit switches.

3. Process of any of claims 1 or 2, for controlling the assembly of an actuator, **characterised in that** the movement of a flap associated to this actuator is controlled and **in that** the conformity between the number of steps counted and the pre-recorded information corresponding to this flap.

4. Process of any of claims 1 to 3, for the attribution of an address to an actuator connected via an information bus to a central command unit, **characterised in that** the movement of the flap associated to this actuator is controlled, this flap is identified by comparison of the number of steps counted and several pre-recorded pieces of information corresponding to different flaps, and in a memory of a circuit associated to the actuator an address is saved which corresponds to the flap identified.
